# EUROPEAN PATENT APPLICATION

(11) **EP 4 738 132 A1**
(43) Date of publication of application: **06.05.2026**
(21) Application number: 25211721.3
(22) Date of filing: 28.10.2025
(51) Int. Cl.: G06F 13/12, G06F 13/40, H04L 12/28, H04L 12/40, H04L 43/0805, H04L 43/0823, G06F 9/4401, G06F 13/38, G06F 13/42, G06F 11/30, H04L 69/24, H04M 1/72409

(54) **INTERFACE ENGINE(S) FOR IDENTIFYING PERIPHERIAL CONNECTIONS BASED ON USER S CLIENT DEVICE**

(30) Priority: 31.10.2024 US 202418933078
(71) Applicant: Microsoft Technology Licensing, LLC, Redmond, WA 98052-6399 (US)
(72) Inventor: AJAX, Michael Jeffrey, Redmond, 98052-6399 (US); VARMA, Shyamal K, Redmond, 98052-6399 (US); CHUNG, Matthew, Redmond, 98052-6399 (US); ANAND, Asha, Redmond, 98052-6399 (US)
(74) Representative: Murgitroyd & Company

(57) **Abstract**

Systems and methods herein provide an interface engine and its related functions. In an example, a method includes identifying, by an interface engine, an event involving a peripheral for a client device. The peripheral is an external device that extends the functionality of the client device. Responsive to identifying the event, the interface engine determines connection capabilities of the client device and determines connection for the peripheral based on the connection capabilities of the client device and the event. The interface engine may then generate and send a notification of the connection to the client device.

## Description

### TECHNICAL FIELD

Aspects of the disclosure are related to the field of computer software applications and services and, in particular, to interface engines for determining or identifying peripheral connections based on a user's client device.

### BACKGROUND

In the modern world, peripherals or external devices that enhance the functionality of client devices are becoming increasingly prevalent. These peripherals, ranging from simple input devices like keyboards and mice to more complex equipment such as external graphics cards and virtual reality headsets, significantly broaden the capabilities of computers, tablets, and smartphones. The growing demand for higher performance and enhanced user experiences drives this trend, as users seek to optimize their devices for gaming, professional work, and creative pursuits. Innovations in connectivity technologies, such as USB-C^{®}, Thunderbolt^{®}, and Bluetooth^{®} have made it easier than ever to integrate these peripherals seamlessly, allowing for greater flexibility and convenience. As a result, the ecosystem of external devices continues to expand, enabling users to tailor their technological setups to meet their specific needs and preferences.

### SUMMARY

Technology disclosed herein includes software applications and services that provide an interface engine, and its related functions. In an example, an interface engine identifies an event involving a peripheral for a client device. For example, the event is a defective connection between the peripheral and the client device, or in another example, the event is a query submitted by the client device involving the peripheral. Responsive to identifying the event, the interface engine determines the connection capabilities of the client device. In some embodiments, this includes determining hardware capacity of the client device or available capacity of the client device. In some cases, determining the hardware capacity is performed by requesting metadata from the client device based on the available capacity and the hardware capacity of the client device. As described in greater detail below, the metadata includes various information about the client device's hardware capacity and/or available capacity, such as port types and specifications, available bandwidth, power delivery capabilities, current hardware utilization, operating system version, driver availability, and any existing peripheral connections.

Responsive to determining the connection capabilities of the client device, the interface engine determines one or more connections for the peripheral based on the connection capabilities of the client device. For example, the interface engine generates an input requesting connections capable of connecting the respective peripheral (identified from the event) to the client device based on the connection capabilities of the client device. The input, which may include a prompt, is then submitted to a content generator which, in turn, outputs a response containing a listing of connections for the client device. The content generator provides the output to the interface engine.

The interface engine generates a notification based on the response from the content generator. The notification includes a recommendation of one or more connections for the peripherals based on the response from the content generator. As described in greater detail below, in some embodiments, the interface engine ranks the connections provided in the response to identify the one or more connections for the client device, depending on the application. Once generated, the interface engine provides the notification to the client device.

In some embodiments, the interface engine determines one or more peripherals compatible with the client device. For example, responsive to determining the connection capabilities of the client device, the interface engine determines one or more peripherals based on the connection capabilities of the client device. Based on the peripherals identified as compatible with the client device, the interface engine generates a notification containing a recommendation of the one or more peripherals and provides the notification to a respective client device.

This Summary is provided to introduce a selection of concepts in a simplified form that are further described below in the Technical Disclosure. It is understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure are better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an example operational environment for providing an interface engine, according to an embodiment herein;
Figure 2 illustrates an example operational system in which an interface engine is provided, according to an embodiment provided herein;
Figure 3 illustrates a process for providing an example interface engine and its related functions, according to an embodiment herein;
Figure 4 illustrates example peripherals and connections for a client device, according to an embodiment herein;
Figure 5 illustrates example notifications generated by an interface engine, according to an embodiment herein;
Figure 6 illustrates another example notification generated by an interface engine, according to an embodiment herein;
Figure 7 illustrates an example flow for providing one or more functions of the interface engine, according to an embodiment herein; and
Figure 8 shows an example client device suitable for providing an interface engine and related functions, according to an embodiment herein.

### DETAILED DESCRIPTION

In recent years, the rise of peripherals has significantly transformed everyday life, enhancing the functionality and versatility of client devices. A peripheral is an external device that connects to a computer or other client device, expanding its capabilities beyond the built-in features. Examples include keyboards, mice, printers, external hard drives, and webcams. These peripherals allow users to perform a wide range of tasks more efficiently and conveniently. For instance, external storage devices provide additional space for data backup, while high-quality printers enable professional-grade printing at home. As technology continues to advance, the integration and importance of peripherals within daily routines only grows, providing tailored solutions to meet various needs.

The proliferation of peripherals has concurrently driven the development and adoption of advanced connectivity technologies, ensuring seamless integration between these external devices and primary systems. Traditional wired connections, such as USB^{®} and HDMI ^{®}, have been complemented by wireless technologies like Bluetooth^{®} and Wi-Fi^{®}, allowing for greater flexibility and mobility. For example, wireless keyboards and mice eliminate the clutter of cables, while Bluetooth^{®} headphones and speakers provide high-quality audio without the need for physical connections. Additionally, the rise of the Internet of Things (IoT) has led to the creation of smart peripherals that can communicate with multiple devices simultaneously, further enhancing their utility. These advancements in connectivity technologies have made it easier than ever to integrate a wide array of peripherals into our everyday lives, enhancing productivity, entertainment, and overall convenience.

While these advancements in connectivity technologies have indeed enhanced the ease and ability to connect with peripherals, the sheer volume of various options has introduced several challenges. Consumers now face a complex landscape of connection types, each with its own standards and compatibility requirements. Even if the user's client device contains a connection option, such as a port for a particular connection, the function of the connection option may vary depending on connection type, version, and/or protocol. For example, if the user's client device includes a USB^{®} port (e.g., the connection option), the USB^{®} transfer speed of the USB^{®} port may depend on the connector type and USB^{®} data protocol version being used. This abundance can lead to confusion, as individuals may struggle to determine the best or correct connection method for their devices.

This struggle often leads to the use of inappropriate, inefficient, or incorrect connections, referred to herein as defective connections, which can result in suboptimal performance, connectivity issues, or even damage to devices. For example, using an incompatible power adapter might lead to power surges, while incorrect or inefficient cable connections could prevent data transfer or diminish audio and video quality. Moreover, confusion with connection options often leads to the inability to take advantage of features offered by a respective peripheral, thereby reducing the quality of a user's experience and the efficiency of the system. As a result, the proliferation of connectivity options, while beneficial in many respects, also demands a higher level of technical understanding from consumers, potentially creating frustration and hindering the seamless integration of peripherals.

To navigate the complex array of connection options for peripherals, users often find themselves needing to perform research or seek assistance from customer support representatives. This necessity can be time-consuming and frustrating, as users must sift through technical specifications and compatibility charts to identify the correct connection method. Relying on online research can be problematic, as information is sometimes outdated, inaccurate, or overly technical for the average consumer. Alternatively, reaching out to customer support representatives, while potentially helpful, can lead to long wait times and varying levels of expertise, which may not always result in a clear or satisfactory resolution. These approaches not only slow down the process of integrating peripherals but also add an additional layer of complexity and inconvenience, detracting from the user experience and potentially leading to suboptimal use of the technology.

Due to the need for research to identify the correct connections, users often resort to guessing which connections should work or opt to use whatever connection is readily available. This trial-and-error approach can lead to defective or improper connections with peripherals. When a connection is not properly matched, several negative outcomes can occur. For instance, an incorrect connection can cause peripherals to malfunction or operate at reduced performance levels, such as slower data transfer speeds or diminished audio and video quality. In some cases, a bad connection can result in intermittent connectivity issues, where the peripheral frequently disconnects and reconnects, causing frustration and disrupting productivity. Moreover, improper connections can sometimes cause physical damage to the ports or cables, leading to costly repairs or replacements. Ultimately, these issues underscore the importance of ensuring the correct connection method, as poor connectivity can significantly detract from the user experience and the overall functionality of the peripheral.

To address at least these challenges present under current connection selection approaches, an example interface engine for identifying a peripheral connection for a client device is provided herein. As will be described in greater detail below, an example interface engine is provided herein that determines a correct or proper connection for connecting a peripheral with a client device based on the connection capabilities of the client device. That is, the interface engine determines the hardware capacity of the client device to determine the connection capabilities of the client device. For example, the interface engine determines how many and what connection options (e.g., ports) the client device includes, and in some cases, determine what ports are available. Based on this information, the interface engine generates a recommendation of connections that the client device is capable of using with the peripheral.

In some embodiments, the interface engine generates the connection recommendation based on detecting an event corresponding to the client device. For example, the interface engine detects a defective connection between the client device and the peripheral, such as a client device that only supports Bluetooth^{®} 2.1 connecting to a pair of Bluetooth^{®} 5.0 headphones. Because the client device doesn't support Bluetooth^{®} 5.0, the resulting connection may result in lower sound quality, increased latency, and have a shorter effective range, resulting in frequent disconnections or an unstable connection. The interface engine detects the defective connection between the client device and the Bluetooth^{®} 5.0 headphones and generates a notification of the defective connection.

In some embodiments, along with the notification, the interface engine generates a recommendation of a correct connection for pairing the client device with the Bluetooth^{®} 5.0 headphones. To generate the recommendation, the interface engine determines the connection capability of the client device. That is, the interface engine determines what Bluetooth^{®} connections the client device can support, which here includes Bluetooth^{®} 2.1. Based on the connection capability of the client device, the interface engine determines one or more connections for connecting the peripheral (e.g., the Bluetooth^{®} 5.0 headphones) with the client device. For example, the interface engine determines that a Bluetooth^{®} adapter, such as a USB^{®} dongle, can be used with the client device to support a Bluetooth^{®} 5.0 connection with the headphones. As such, the interface engine generates the recommendation identifying the Bluetooth^{®} adapter, and in some embodiments, include a link to information on the Bluetooth^{®} adapter.

In some embodiments, instead of recommending a correct connection for pairing the client device with the Bluetooth^{®} 5.0 headphones, the interface engine recommends a particular pair of headphones or a selection of headphones that is/are compatible with the current connection capabilities of the client device. Following the headphone example, the interface engine determines that the client device supports Bluetooth^{®} 2.1 and as such recommend headphones that support Bluetooth^{®} 2.1. In some cases, the interface engine generates a recommendation that provides the user with both recommendations. That is, the interface engine may notify the user of the defective connection and recommend either changing the connection with the current peripheral or changing the peripheral based on the current connection.

By automatically assessing the compatibility requirements of both a peripheral and a respective client device, the interface engine can recommend a connection and/or a peripheral that provides the most efficient and proper connection between the two devices. This not only enhances the user experience, but it minimizes the risk of incorrect connections that could lead to device damage or performance issues. In other words, by recommending a correct connection based on the connection capability of the client device, the interface engine not only saves user time spent on research and troubleshooting, but it also ensures that a correct connection is established between the client device and the peripheral. As those skilled in the art readily appreciate, a correct connection ensures optimal performance of the peripheral, allowing it to operate at its intended capacity. For example, using the appropriate USB^{®} standard ensures fast data transfer rates for external storage devices, enhancing workflow efficiency and data management.

Additionally, by identifying correct connections (e.g., connections that facilitate the full capabilities of the peripheral and the client device) the interface engine enables access to advanced features and functionalities that may not be supported by a defective connection. This could include utilizing high-definition audio codecs in Bluetooth^{®} headphones for superior sound quality or accessing high-resolution displays through proper HDMI^{®} connections. Moreover, the interface engine provides a stable and reliable user experience by identifying and recommending correct connections based on the respective client device, thereby reducing instances of connectivity issues, such as dropouts or lag in wireless peripherals. Beyond immediate performance gains, by establishing correct connections the interface engine also extends the lifespan of both the device and peripheral by minimizing wear and tear associated with improper use (e.g., using a connection with an incompatible shape or type for the client device causing damage to the device's port). Ultimately, the interface engine enhances user satisfaction, productivity, and the overall effectiveness of technology use in everyday tasks and professional environments alike.

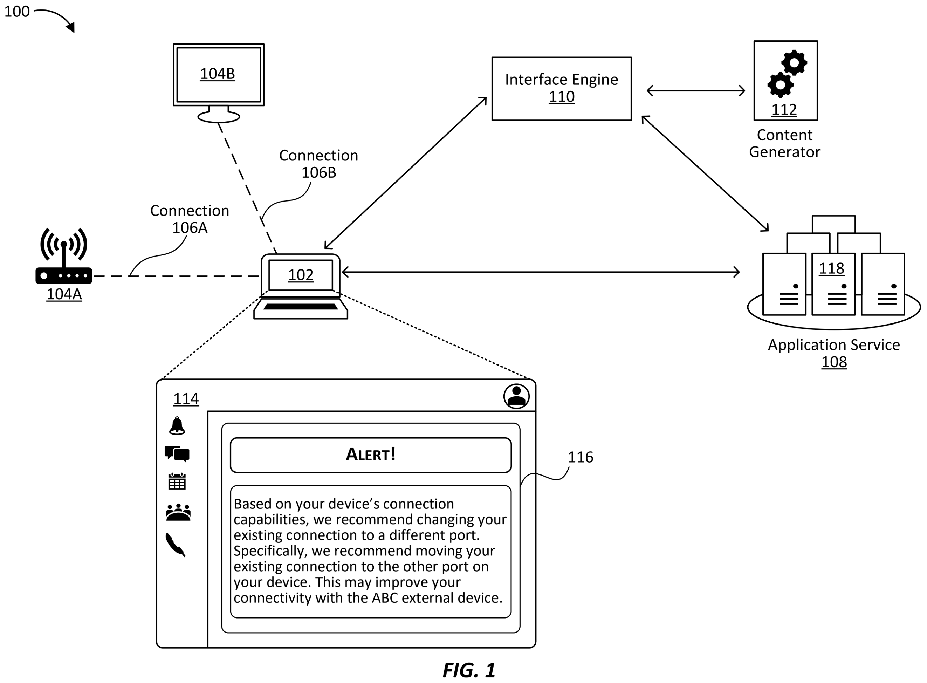

Turning now to **Figure 1,** Figure 1 illustrates an operational environment 100 for providing an interface engine, according to an embodiment herein. In particular, the operational environment 100 illustrates a client device 102 connected to peripherals 104A and 104B via connections 106A and 106B, respectively. As illustrated, the client device 102 connects to the peripherals 104A and 104B to extend the functionality of the client device 102. For example, as illustrated, the peripheral 104A is a wireless router that provides wireless internet access to the client device 102. As such, the connection 106A linking the client device 102 with the peripheral 104A is a wireless connection, such as a Wi-Fi connection. Similarly, as illustrated, the peripheral 104B is an external monitor that extends the screen capacity of the client device102. To connect the client device 102 with the peripheral 104B, the connection 106B may vary depending on the specifications and hardware of the client device 102 and the peripheral 104B. As such, the connection 106B is an HDMI^{®} (High-Definition Multimedia Interface), a DisplayPort^{®}, VGA (Video Graphics Array), DVI^{®} (Digital Visual Interface), USB-C^{®} or Thunderbolt^{®} 3/4, or a wireless connection, such as Miracast. It should be appreciated that while only two peripherals 104A-B are illustrated, the client device 102 may connect to any number of peripherals.

As shown, the client device 102 uses an application service 108 for one or more functions or features. Broadly speaking, the application service 108 provides software application services to end points, such as the client device 102, examples of which include productivity software for creating content (e.g., whiteboards, word processing, spreadsheets, and presentations). The client device 102 loads and executes software applications locally that interface with services and resources provided by the application service 108. The applications may be natively installed and executed applications, web-based applications that execute in the context of a local browser application, mobile applications, streaming applications, or any other suitable type of application. Example services and resources provided by the application service 108 include front-end servers, application servers, content storage services, authorization and authentication services, and the like.

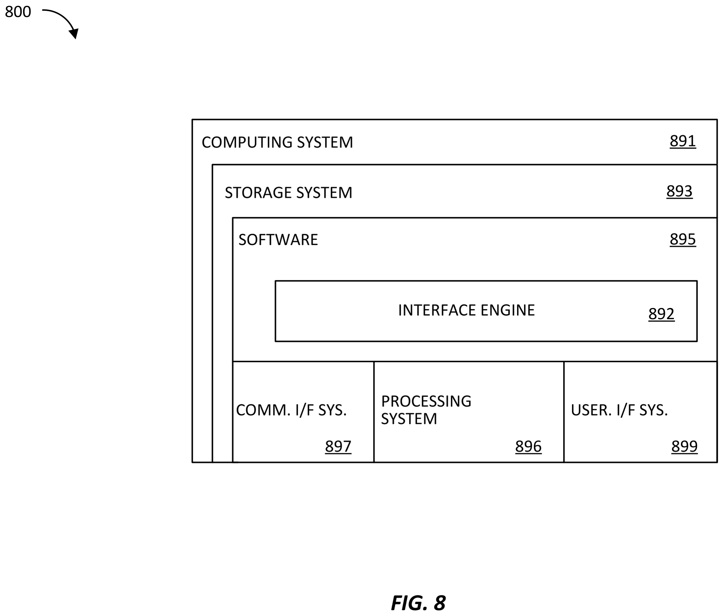

To interact with the application service 108, the client device 102 communicates with the application service 108 via one or more internets and intranets, the Internet, wired and wireless networks, local area networks (LANs), wide area networks (WANs), or any other type of network or combination thereof. Examples of the client device 102 include personal computers, tablet computers, mobile phones, gaming consoles, wearable devices, Internet of Things (IoT) devices, and any other suitable devices, of which computing apparatus 891 in Figure 8 is also broadly representative.

In the illustrated example, the application service 108 operates in a cloud-based environment. As such, the application service 108 employs one or more server computers 118 co-located with respect to each other or distributed across one or more data centers to deliver its functionalities and services. Example servers include web servers, application servers, virtual or physical servers, or any combination or variation thereof, of which computing apparatus 891 in Figure 8 is broadly representative.

As illustrated, the application service 108 includes an integration with the interface engine 110 to identifying events associated with peripheral connections for the client device 102. In some embodiments, the interface engine 110 is executed remotely by the application service 108 or a third party, while in other embodiments the interface engine 110 is installed and executed locally on the client device 102. In still other embodiments, one or more functions of the interface engine 110, as described herein, is installed and executed locally on the client device 102, while the remaining functions are integrated and executed remotely via the application service 108 or a third party.

To identify events associated with peripheral connections for the client device 102, the interface engine 110 monitors the client device 102 for peripheral connections, such as the connections 106A-B. For example, the interface engine 110 scans the client device 102 at predefined time intervals to determine whether the connections 106A-B were defective connections. In another example, the interface engine 110 may detect when the connections 106A-B are connected to the client device 102 to determine if one or both of the connections 106A-B are defective connections. As will be described in greater detail below, the interface engine 110 may determine a defective connection based on the connection capability of the client device 102 and any established connections, such as the connections 106A-B. In another example, another application, such as the application service 108 monitors the client device 102 to detect defective connections. Upon detecting a defective connection, the application service 108 notifies the interface engine 110 of the defective connection.

In some embodiments, an event associated with a peripheral connection, such as the connection 106B, is a query from the client device 102. For example, the interface engine 110 is integrated with a virtual assistant (VA) application, such as a VA application provided by the application service 108. In such an example, when the client device 102 submits a query to the VA application requesting assistance with connecting to the peripheral 104B, the interface engine 110 is invoked or otherwise activated. The interface engine 110 receives the query from the client device 102, either directly or indirectly via the application service 108.

Responsive to identifying the event, the interface engine 110 determines one or more connections for connecting the client device to a respective peripheral. For example, if the event is the client device 102 requesting assistance with identifying a proper connection to connect to the peripheral 104B, the interface engine 110 determines one or more connections that provide a proper connection between the client device 102 and the peripheral 104B. As used herein, a proper connection is a connection that allows for the full range of functions and capabilities of a respective peripheral to be utilized by a connecting client device.

To determine a proper connection for the client device 102 and the peripheral 104B, the interface engine 110 determines connection capabilities of the client device 102. As will be expanded on in greater detail below, this includes determining the hardware capacity, and in some cases, the available capacity of the client device 102. In some cases, the interface engine 110 determines the connection requirements of the peripheral. Based on the connection capabilities of the client device 102, and in some cases, also the connection requirements of the peripheral, the interface engine 110 determines the one or more connections for connecting the client device 102 to the peripheral 104B.

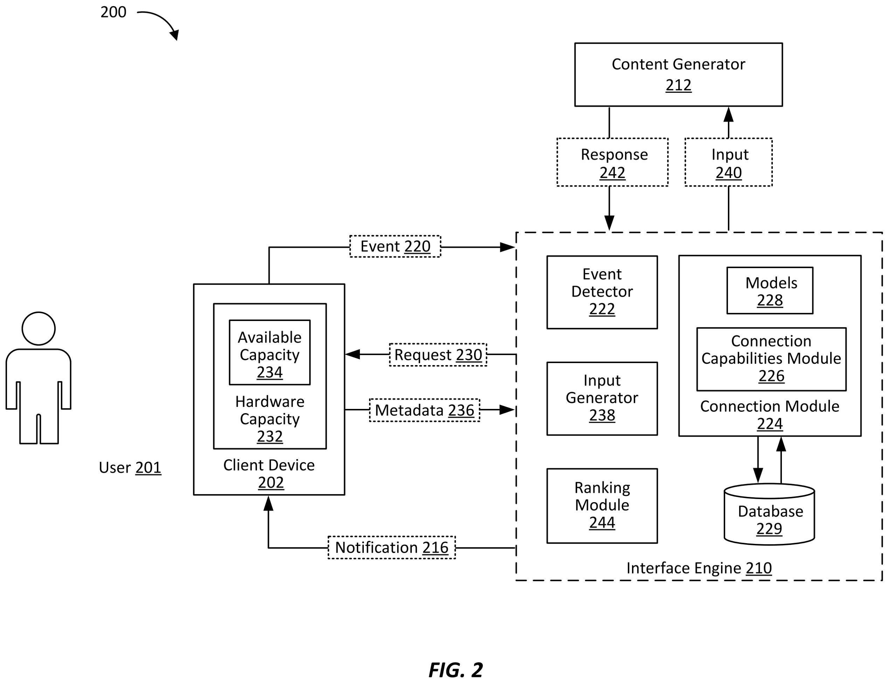

In some embodiments, to determine the proper connection for the peripheral 104B, the interface engine 110 employs a content generator 112. In such cases, the application service 108 includes or is in operational communication with one or more content generators 112. In some embodiments, the application service 108 is a content generating application, thus including the content generator 112. In other embodiments, the content generator 112 is hosted by a third party or remote from the application service 108. And in still other embodiments, the content generator 112 is part of the interface engine 110. As will be expanded on in greater detail below with respect to Figures 2-7, the content generator 112 is an artificial intelligence (AI) content generator that produces content using neural networks, deep learning techniques, and/or natural language processing (NLP) techniques.

When the interface engine 110 identifies the event and determines the connection capabilities of the client device 102 (and in some cases, the connection requirements of the peripheral 104B), the interface engine 110 prepares a input requesting a listing of connections that could be used to establish the connection 106B between the peripheral 104B and the client device 102. The input includes information on the event (e.g., a defective connection or query), the peripheral 104B, and the connection capabilities of the client device 102. As will be described below, the content generator 112 is trained on one or more datasets that include information on connective technologies based on various peripherals and connection capabilities of client devices, such as the client device 102. As such, responsive to receiving the input, the content generator 112 generates a response that includes a list of potential connections for properly or optimally connecting with the peripheral 104B.

When the interface engine 110 receives the response from the content generator 112, the interface engine 110 determines one or more connections from the listing of potential connections. Once the one or more connections are determined, the interface engine 110 generates a notification 116 including the one or more connections. As illustrated, the notification 116 is provided to the client device 102 via a user interface 114 of an application executing on the client device 102. The application may correspond to the application service 108 or with an application associated with the interface engine 110. As will be expanded on below, the notification 116 includes an alert of a detected defective connection and/or includes a recommendation of the one or more connections for properly or optimally connecting with the peripheral 104B.

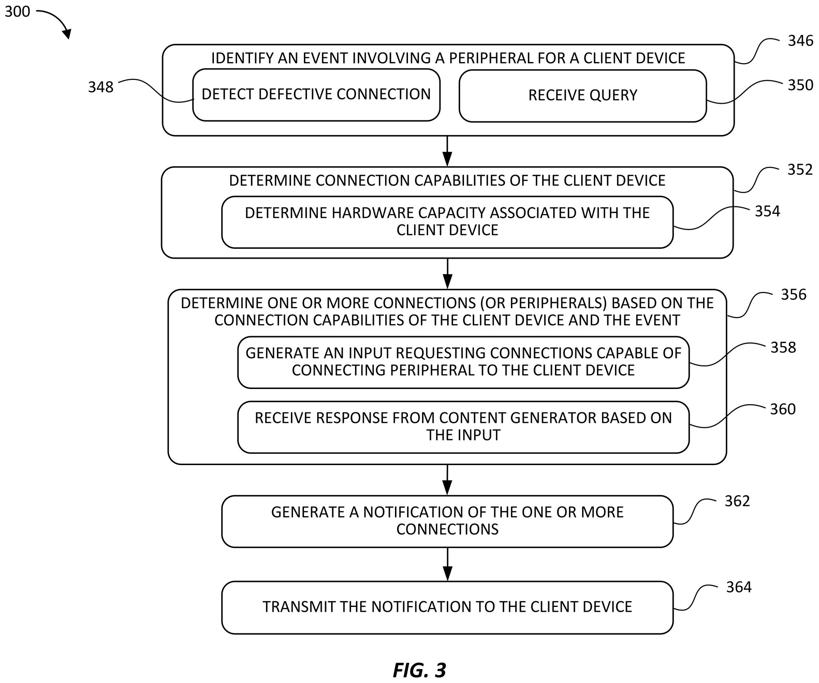

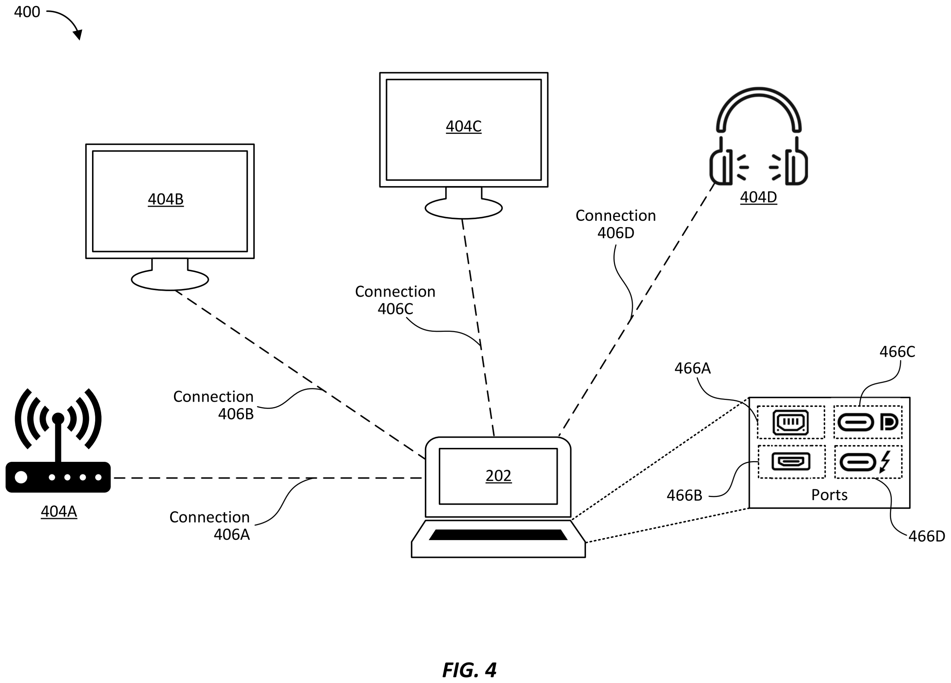

Referring now to **Figure 2****,** an example operational system 200 in which an interface engine 210 is provided, according to an embodiment herein. For ease of illustration, Figure 2 is described with respect to **Figure 3****,** which provides a process 300 for providing an interface engine and its related functions, such as the interface engine 210, according to an embodiment herein. For ease of illustration, Figure 2 is also described with respect to **Figure 4****,** which illustrates example peripherals and connections, according to an embodiment herein. Although Figures 3 and 4 are described in relation to Figure 2, it should be appreciated that the process 300 of Figure 3 and the example peripherals and connections of Figure 4 are equally applicable to the remaining Figures and components therein.

As shown, the system 200 includes an interface engine 210 in operable communication with a client device 202, which may be the same or similar to the client device 102. For example, the interface engine 210 may be provided by an application executing on the client device 202, such as an application associated with the application service 108. In some embodiments, the interface engine 210 is executed locally by the client device 202, while in other embodiments, the interface engine 210 is executed remotely from the client device 202, such as by a cloud-based application service or third party.

As shown, the client device 202 is connected to or configured to be connected to one or more peripherals. With reference to Figure 4, the client device 202 is connected or capable of connecting to one or more peripherals 404A-D. The peripheral 404A, which may be the same or similar to the peripheral 104A, is a wireless router which provides internet access to the client device 202, the peripherals 404B and 404C, which may be the same or similar to the peripheral 104B, are external monitors that extend the screen capacity of the client device 202, and the peripheral 404D is a pair of Bluetooth^{®} headphones. Each of the peripherals 404A-D may establish or be configured to establish respective connections 404A-D with the client device 202. For example, the peripheral 404A establishes the connection 406A, which is a wireless Wi-Fi connection, the peripherals 404B-C establish connections 406B-C, respectively, which is hardware connections, such as USB^{®} (Universal Serial Bus), Thunderbolt^{®}, or DisplayPort^{®} connections, and the peripheral 404D establishes the connection 406D, which is a wireless Bluetooth^{®} connection.

It should be appreciated that while the following discussion only focuses on the peripherals 404A-D and their respective connections 406A-D, the client device 202 may connect to any number of peripherals via various connections. Other examples of peripherals that the client device 202 may interact with to extend its functionality include printers, scanners, external storage devices, keyboards, mice, webcams, microphones, monitors, virtual reality headsets, game controllers, external GPUs, and smart home devices. These peripherals can be connected to the client device 202 through various types of hardware connections, such as USB^{®}, Thunderbolt^{®}, HDMI^{®}, Ethernet or proprietary connectors, or wireless connections, such as Bluetooth^{®} or Wi-Fi^{®}, depending on the device and its compatibility requirements. Each connection type offers distinct advantages in terms of speed, power delivery, or specialized functionality, allowing the client device 202 to adapt and expand its capabilities as needed.

Returning now to Figure 2, the interface engine 210 is activated or evoked when an event 220 is identified (346). The event 220 is an event involving a peripheral for the client device 202. In particular, the interface engine 210 includes an event detector 222 that detects or identifies the event 220. In one embodiment, the event detector 222 of the interface engine 210 detects a defective connection between a peripheral, such as the peripheral 404B, and the client device 202

(348). A defective connection is a suboptimal or improper connection or linkage that impedes the seamless functionality and communication intended between the peripheral 404B and the client device 202. A defective connection may result in unreliable data transfer, intermittent power supply, or a complete failure to recognize or utilize the peripheral's features effectively. In an example, a defective connection causes a fault between the peripheral 404B and the client device 202. The interface engine 210 detects the fault and determines the presence of a defective connection. In another example, the defective connection causes an improper connection between the peripheral 404B and the client device 202, which is detected by the interface engine 210. The improper connection may reduce the functionality of the peripheral 404B for the client device 202. As used herein, an improper connection is a connection that does not allow for the full range of functionalities of a respective peripheral to be available for the client device 202. For example, an improper connection is a connection that results in reduced data transfer, inconsistent power supply, reduced audio or video quality, and the like.

In some embodiments, to identify the event 220, the interface engine 210 monitors the client device 202 for defective connections. For example, interface engine 210 monitors communication signals exchanged by the client device 202 for irregularities such as intermittent data transmission or sudden drops in signal strength. In another example, the interface engine 210 performs diagnostic tests to check for consistent power delivery, proper device recognition, and error-free data exchange. In some embodiments, an application executing on the client device 202 monitors the client device 202 for defective connections, and in the event that a defective connection is identified, alert the interface engine 210. The alert from the application is the event 220 involving a peripheral that the event detector 222 identifies.

In some embodiments, instead of being a defective connection, the event 220 is a query submitted by a user 201 of the client device 202 involving a peripheral. For example, the user 201 submits a query to a VA application requesting help connecting a peripheral, such as the peripheral 404B to the client device 202. An example query is "I recently purchased a new monitor, what types of connections to I need to set it up?" Such a query is received by the interface engine 210 and the event detector 222 identifies the event 220 based on the query. In an example, the event detector 222 performs one or more natural language processes on the query to identify a respective peripheral and the actions requested by the user 201 with respect to the peripheral. As can be appreciated, the interface engine 210 includes a VA application or be integrated into a VA application such that the interface engine 210 receives queries directly from the client device 202.

Once the event 220 is identified, the interface engine 210 determines the connection capabilities of the client device 202 (352). In particular, the interface engine 210 includes a connection module 224 having a connection capability module 226 therein. The connection capability module 226 determines the connection capability of the client device 202. To determine the connection capability of the client device 202, the connection capability module 226 determines a hardware capacity 232 of the client device 202 (354). The hardware capacity 232 of the client device 202 includes information or specifications regarding the client device's 202 ability to support and manage peripheral connections, determined by its built-in ports, processing power, memory, and compatibility with various connection standards.

In some embodiments, the hardware capacity 232 dictates the types and number of peripherals 404A-D that can be efficiently connected and operated simultaneously. For instance, with reference to Figure 4, the client device 202 includes ports 466A-D. The port 466A is a VGA^{®} port, the port 466B is an HDMI^{®} port, the port 466C is a USB-C^{®} with DisplayPort^{®} port, and the port 466D is a Thunderbolt^{®} 3 or 4 port. Along with the ports 466A-D, the client device 202 includes RAM (Random Access Memory), a processor that can handle various-speed data transfers, and a graphics card that can handle various graphic-intensive applications. Accordingly, depending on the hardware capacity 232, the client device 202 can support varying connections and peripherals.

In some embodiments, the interface engine 210 determines an available capacity 234 instead of the hardware capacity 232 of the client device 202. That is, at any given time, the client device 202 may be using a portion of the hardware capacity 232 to support existing peripheral connections or applications, which is referred to as the available capacity 234. As can be appreciated, the available capacity 234 of the client device 202 is dynamic, and thus the interface engine 210 determines the available capacity 234 at run-time or at the time that the event 220 is detected. Consequently, when the event 220 is identified, there may only be a portion of the hardware capacity 232 available, limiting the ability to accommodate additional peripherals or applications without impacting performance. For example, if the client device 202 is already running a resource-intensive application and utilizing multiple high-speed peripheral connections, the available capacity 234 is insufficient to support an additional external GPU or 4K monitor without degradation in system performance. However, in the absence of the resource-intensive application and the high-speed peripheral connections, the client device 202 would be able to support the external GPU or 4K monitor without issue.

To determine the hardware capacity 232, and in some embodiments the available capacity 234, the interface engine 210 transmits a request 230 to the client device 202. The request 230 is a request for metadata 236 associated with the hardware capacity 232 and/or the available capacity 234. The metadata 236 includes various information about the hardware capacity 232 and/or available capacity 234, such as the client device's 202 port types, placement, and specifications, available bandwidth, version compatibility, power delivery capabilities, current hardware utilization, operating system version, driver availability, and any existing peripheral connections. In some embodiments, the metadata 236 is dynamic metadata in that it changes depending on the available capacity 234 of the client device 202 at the time of the event 220 (e.g., run time). As will be expanded on in more detail below, the interface engine 210 requests both the hardware capacity 232 and the available capacity 234 of the client device 202, which may allow the interface engine 210 to recommend an alternative arrangement of the connections 406A-D to achieve proper connections.

Responsive to receiving the metadata 236, the interface engine 210 determines one or more connections for the peripheral, here the peripheral 404B (356). It should be appreciated that while the following discussion focuses on the interface engine 210 determining connections for the peripheral 404B, in some embodiments, the interface engine 210 determines one or more peripherals that are compatible with the client device and the current connection. Identification and recommendation of a peripheral based on the current connection and client device is a similar process as following processes for identifying and recommending a connection based on the current peripheral and client device. For example, the interface engine 210 determines a current peripheral 404B based on the current connection 406B between the client device 202 and the peripheral 404B. Instead of or in addition to recommending changing the current connection 406B to better support the current peripheral 404B, the interface engine 210 recommends changing the current peripheral 404B with another peripheral that is better supported by the current connection 406B and the client device 202.

To determine proper connections for the peripheral 404B based on the connection capabilities (e.g., the metadata 236) of the client device 202, the interface engine 210 employs a content generator, such as the content generator 212. While the content generator 212 is illustrated as separate from the interface engine 210, in some embodiments the content generator 212 is part of the interface engine 210. For example, as shown, the connection module 224 includes one or more models 228. The models 228 is integrated with or used by the content generator 212 to determine connections for the peripheral 404B.

The models 228 is or include one or more generative models, such as variational autoencoders (VAEs), generative adversarial networks (GANs), and autoregressive models like Long Short-Term Memory (LSTM) depending on the application and configuration of the interface engine 210. In some embodiments, the models 228 includes a large language model (LLM) that is trained on one or more datasets containing connectivity technology information. The datasets are stored in a database 229. While the database 229 is illustrated as part of the interface engine 210, it should be appreciated that the database 229 is hosted separately from the interface engine 210, such as by a third party. The datasets on which the models 228 are be trained includes technology specifications for various peripherals, connections, and client devices, knowledge based articles on connectivity technologies, custom documentation, reliability and bug data (e.g., known issues with specific hardware or software information), and user feedback.

To determine the connections for a respective peripheral, here the peripheral 404B, the interface engine 210 generates an input 240 for submission to the content generator 212 (358). In particular, the interface engine 210 includes a input generator 238 for generating the input 240. The input 240 includes a request for connections capable of connecting the peripheral 404B with the client device 202 based on the connection capabilities of the client device 202. In some embodiments, this includes transmitting the metadata 236 along with the identified event 220 (e.g., query about a new connection, defective connection) and information on the respective peripheral 404B as part of the input 240.

In an example, based on the event 220, the interface engine 210 determines what the peripheral 404B is (e.g., external monitor) and any connectivity requirements associated with the peripheral 404B. For example, the interface engine 210 determines that the peripheral 404B is a 4K external monitor based on the query received from the client device 202. Then based on the information from the query, the connection module 224 may query the database 229 to determine the connectivity requirements of the peripheral 404B. In some embodiments, this includes prompting the content generator 212 to request the connectivity requirements of the peripheral 404B.

Responsive to receiving the input 240, the content generator 212 provides a response 242 to the interface engine 210 (360). As noted above, the content generator 212 uses or employs one or more of the models 228. As such, the response 242 includes a listing of potential connections that are used for the connection 406B between the peripheral 404B and the client device 202. The listing provides potential connections that are compatible with the client device 202 and the peripheral 404B based on the connection capabilities of the client device 202. Although the following discussion is with respect to a listing of potential connections, it should be appreciated that in some embodiments, the response 242 may only include a connection. In the scenario where no connection is identified, then the interface engine 210 may generate a link or contact information for learning more about the client device 202.

In some embodiments, the response 242 includes an arrangement recommendation. That is, along with identifying connections (e.g., a USB-C DisplayPort) compatible with the client device 202 based on its connection capabilities and the peripheral 404B, the content generator 212 identifies potential rearrangements of existing connections that better accommodate the requested connection. For example, if the event 220 is a defective connection between the peripheral 404B and the client device 202, the response 242 includes an arrangement recommendation. The interface engine 210 detects that the peripheral 404B is connected to the client device 202 via the HDMI^{®} port 466B and the peripheral 404C, also an external monitor, is connected to the client device 202 via the Thunderbolt^{®} 3/4 port 466D. Based on the metadata 236, the interface engine 210 determines that the full functionality of the peripheral 404C can be utilized via the USB-C^{®} DisplayPort^{®} 466C. As such, the response 242 is a rearrangement recommendation to move the connection 406C for the peripheral 404C to the USB-C^{®} DisplayPort^{®} 466C and connect the peripheral 404B to the client device 202 via the Thunderbolt^{®} 3/4 port 466D.

In some embodiments, the rearrangement request includes recommending a dongle or docking station that allows for proper or proper connection between the peripheral and the client device 202. Following the above Bluetooth^{®} 5.0 headphones example, the response 242 from the content generator 212 is a recommendation to add a Bluetooth^{®} adaptor dongle such that the Bluetooth^{®} 5.0 headphones 404D can establish the connection 406D with the client device 202, despite the client device 202 only having Bluetooth^{®} 2.1 capabilities.

In some embodiments, when the interface engine 210 receives the listing of potential connections, the interface engine 210 may rank the potential connections prior to generating a recommendation of which connections are applicable for the client device 202. In particular, the interface engine 210 includes a ranking module 244 that may rank the connections based on the connection capabilities of the client device 202. As can be appreciated, the ranking may depend on the event 220, existing peripheral connections, and the connection capabilities of the client device 202. For example, the listing of potential connections includes multiple connections that allow proper connection between the peripheral 404B and the client device 202. As such, the ranking module 244 ranks the connections in the listing based on various factors, such as data transfer rates, versatility, power savings, rearrangement requirements, or additional component requirements. In one embodiment, if two connections provide a proper connection, the ranking module 244 may rank the connection that provides faster data transfer rates higher than the other connection, the connection that provides more power savings higher than the other connection, or may rank the connection that requires no additional components over a connection that requires an additional component (e.g., use of a dongle or docking station). In some embodiments, the ranking module 244 ranks connections based on their memory and processing utilization, such to minimize available capacity 234 used by peripheral while maintaining a proper connection. As can be appreciated, by ranking the connections the interface engine 210 provides the user 201 with options for connecting the peripheral 404B to the client device 202.

Once one or more connections are identified, either directly from the response 242 or by the ranking module 244, the interface engine 210 generates a notification 216 of the one or more connections (262). The notification 216 includes a recommendation to use the one or more connections for connecting the peripheral 404B to the client device 202. In some embodiments, the notification 216 provides a ranked listing of the connections to provide the user 201 with options, depending on available hardware or equipment available to the user 201. The notification 216 may then be transmitted to the client device 202 (264), where the notification 216 is displayed to the user 201. Depending on the scenario, the notification 216 is provided to the user 201 as part of a message exchange via a VA application or as a stand-alone notification 216. Each of these is described in turn below.

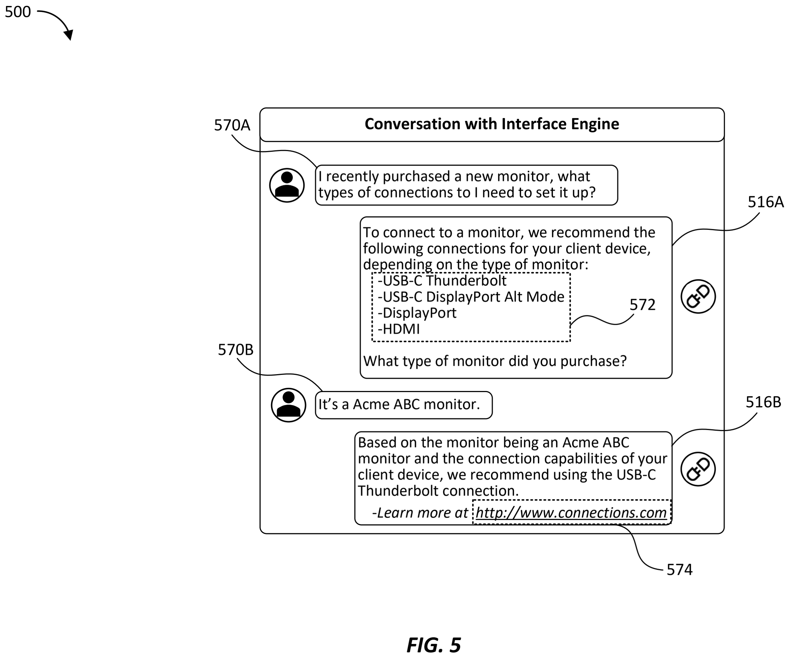

Referring now to **Figure 5****,** example notifications 516A and 516B are illustrated, according to an embodiment herein. As shown, a window 500 depicts a message exchange between a user, such as the user 201, and an interface engine, such as the interface engine 210. As noted above, the interface engine 210 includes a virtual assistant component to allow the interface engine 210 to exchange messages with the user 201.

As illustrated, the user 201 submits a query 570A requesting connections to set up a new monitor. The query 570A is the event 220 which is identified by the interface engine 210. As such, responsive to the query 570A, the interface engine 210 generates a notification 516A. As shown, the notification 516A includes a listing of connections 572 for an external monitor (e.g., peripheral) that are compatible with the client device 202 based on the connection capabilities of the client device 202. The listing of connections 572 is generated by the content generator 212 based on the metadata 236 received from the client device 202.

As shown, the notification 516A requests additional information on the external monitor to further refine the connection recommendations. The user 201 provides a response 570B noting that the external monitor is an Acme ABC monitor. Based on this information, the interface engine 210 identifies a specific connection from the listing of connections 572 to recommend to the client device 202. In some embodiments, to identify which of the connections from the listing of connections 572 would provide a proper connection for the client device 202 to the peripheral, the interface engine 210 generates a subsequent input requesting the content generator 212 identify which of the listing of connections 572 would provide a proper connection for an Acme ABC monitor. As can be appreciated, in some embodiments, identification of the monitor or respective peripheral is performed as part of the query 570A or is identified directly by the interface engine 210 if the event 220 involves a defective connection.

The interface engine 210 generates the notification 516B recommending a specific connection from the listing of connections 572 based on the identification of the external monitor. Here, the notification 516B recommends the USB-C Thunderbolt connection for the external monitor. In some embodiments, the notification includes a link 574 to additional information about the recommended connection. For example, the link 574 is to a webpage providing technical information on the recommended connection, or the link 574 is to where the user 201 can purchase the connection.

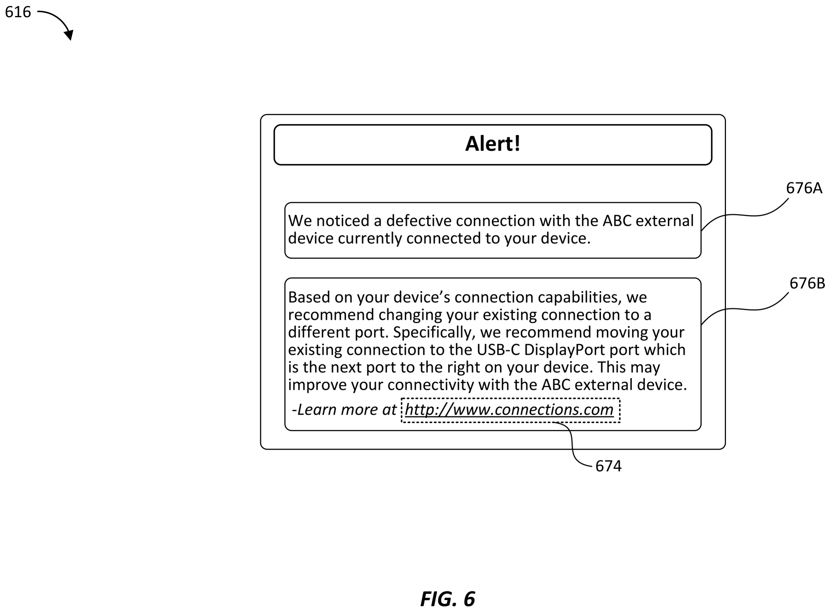

Referring now to **Figure 6****,** another example notification 616 is illustrated, according to an embodiment herein. As shown, the notification 312 includes an alert 676A and a recommendation 676B. The example notification 616 is generated by the interface engine 210 as described above, responsive to the interface engine 210 detecting a defective connection as the event 220. The alert 676A may indicate that a defective connection was detected and with which peripheral the defective connection is associated. Based on the defective connection and the associated peripheral, the interface engine 210 generates the recommendation 676B including a rearrangement recommendation. As shown, the recommendation 676B is to move the existing connection to the USB-C^{®} DisplayPort^{®}. The recommendation 676B includes a verbal description of which port on the client device 202 is the USB-C^{®} DisplayPort^{®}. As can be appreciated, logos or symbols provided on client devices to designate port types may degrade over time or be difficult for users to view/read. As such, the recommendation 676B includes a description of a recommended connection or port. Additionally, the recommendation 676B includes a link 674 to additional information about the recommended connection. For example, the link 674 provides a schematic of the ports of the client device 202 along with a clear description of which port the user 201 should move the existing connection to.

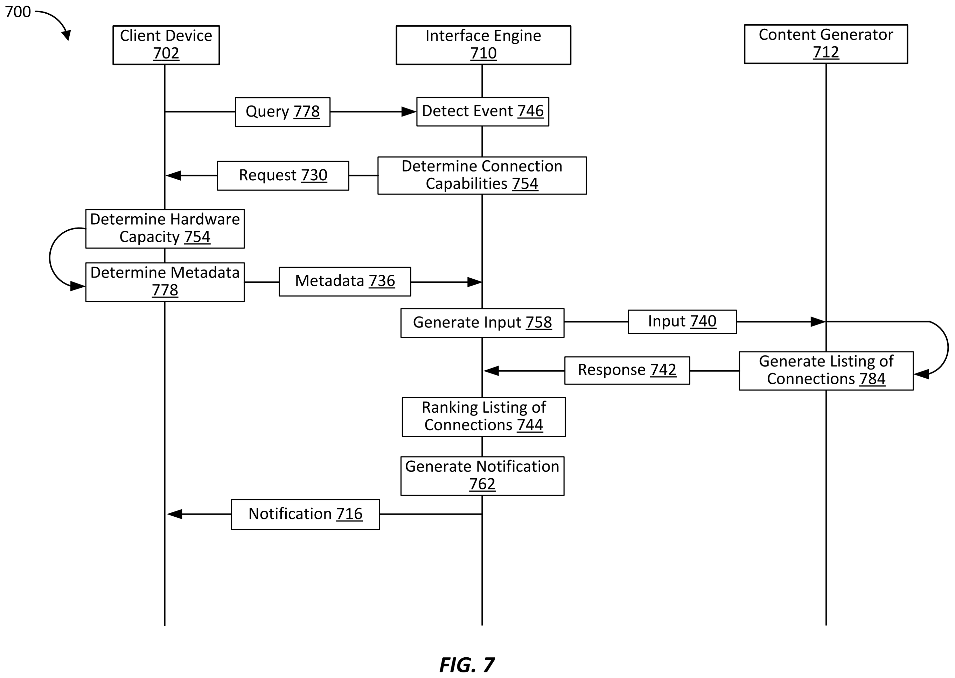

Referring now to **Figure 7****,** an example flow 700 for providing one or more functions of an interface engine is illustrated, according to an embodiment herein. As shown, the flow 700 includes a client device 702, which is the same or similar to the client device 202, submitting a query to an interface engine 710 (778), which is the same or similar to the interface engine 210. As noted above, the client device 702 may submit the query to a VA application which in turn provides the query to the interface engine 710. The query includes a request or comment involving a peripheral, such as the peripheral 404B. Based on the query, the interface engine 710 detects an event (746).

Responsive to detecting the event, the interface engine 710 determines the connection capabilities of the client device 702 (754). To determine the connection capabilities of the client device 702, the interface engine 710 transmits a request to the client device 702 (730). The request is for information about the hardware capacity of the client device 702, such as a request for the metadata 236. Responsive to receiving the request, the client device 702 determines the hardware capacity of the client device 702 (754). As noted above, in some embodiments, this includes determining the available capacity of the client device 702 at the time that the request is received. Based on the hardware capacity, the client device 702 determines metadata, such as the metadata 236 (702). The client device 7002 then transmits the metadata back to the interface engine (736). It should be appreciated that the interface engine 710 may interact with the client device 702 to determine the connection capabilities automatically and without input from a user of the client device 702 once an event is detected.

The interface engine 710 generates an input based on the connection capabilities of the client device 702 (758) and submits the input to a content generator 712, which is the same or similar to the content generator 212 (740). Responsive to receiving the input, the content generator 712 generates a listing of connections compatible with the connection capabilities of the client device 702 for the respective peripheral (784). Once generated, the content generator 712 provides the listing of connections via a response to the interface engine 710 (742).

As noted above, in some embodiments, the interface engine 710 may rank the listing of connections (744), such as based on the available capacity of the client device 702 or to minimize rearrangement or additional components needed. Then the interface engine 710 generates a notification that includes a recommendation of one or more connections for the client device 702 to use (762). The notification then is provided to the client device 702 (716), such as a response in a message exchange via a VA application or as a standalone notification, such as the notification 616. Based on the notification, a user of the client device can then connect the respective peripheral to the client device 702 to achieve a proper or proper connection with the peripheral.

Referring to **Figure 8,** Figure 8 illustrates a computing apparatus 891 that is used for providing an interface engine and related functions, as described herein. For example, the client device 102 or 202 is or includes the computing apparatus 891. As illustrated, the computing apparatus 891 includes a processing system 892 that includes a microprocessor and other circuitry that retrieves and executes software 895 from storage system 893. The processing system 892 is implemented within a single processing device but may also be distributed across multiple processing devices or sub-systems that cooperate in executing program instructions. Examples of the processing system 892 include general purpose central processing units, graphical processing units, application specific processors, and logic devices, as well as any other type of processing device, combinations, or variations thereof.

The storage system 893 may comprise any computer-readable storage media or medium readable by processing system 892 and capable of storing software 895. The storage system 893 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 893 may also include computer readable communication media over which at least some of the software 895 is communicated internally or externally. The storage system 893 may be implemented as a single storage device but may also be implemented across multiple storage devices or sub-systems co-located or distributed relative to each other. The storage system 893 may comprise additional elements, such as a controller capable of communicating with the processing system 892 or possibly other systems.

The software 895 (including interface engine process 696) may be implemented in program instructions and among other functions may, when executed by the processing system 892, direct the processing system 892 to operate as described with respect to the various operational scenarios, sequences, and processes illustrated herein. For example, the software 895 includes program instructions for implementing an interface engine and related functions, such as the process 300 or the flow 700, as described herein.

In particular, the program instructions include various components or modules that cooperate or otherwise interact to carry out the various processes and operational scenarios described herein. The various components or modules are embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 895 may include additional processes, programs, or components, such as operating system software, virtualization software, or other application software. The software 895 may also comprise firmware or some other form of machine-readable processing instructions executable by the processing system 892.

In general, the software 895 may, when loaded into the processing system 892 and executed, transform a suitable apparatus, system, or device (of which computing apparatus 891 is representative) overall from a general-purpose computing system into a special-purpose computing system customized to generate features, functionality, and user experiences provided by the interface engine. Indeed, encoding the software 895 on the storage system 893 may transform the physical structure of the storage system 893. The specific transformation of the physical structure may depend on various factors in different implementations of this description. Examples of such factors include, but are not limited to, the technology used to implement the storage media of the storage system 893 and whether the computer-storage media are characterized as primary or secondary storage, as well as other factors.

For example, if the computer readable storage media are implemented as semiconductor-based memory, the software 895 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 697 includes communication connections and devices that allow for communication with other computing systems (not shown) over communication networks (not shown). Examples of connections and devices that together allow for inter-system communication may include network interface cards, antennas, power amplifiers, Radio Frequency (RF) circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between the computing apparatus 891 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA) specifically to execute the various methods according to this disclosure. For example, examples can be implemented in digital electronic circuitry, or in computer hardware, firmware, software, or in a combination thereof. In one example, a device includes a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as Programmable Logic Controllers (PLCs), programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of which include an electronic, optical, magnetic, or other storage device capable of providing a processor, such as the processor in a web server, with processor-executable instructions. Other examples of non-transitory computer-readable media include a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for providing an interface engine and related functions. Those of ordinary skill in the art will realize that the foregoing description is illustrative only and is not intended to be in any way limiting. Reference is made in detail to implementations of examples as illustrated in the accompanying drawings. The same reference indicators will be used throughout the drawings and the following description to refer to the same or like items.

Additionally, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure. In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a computing apparatus comprising: a computer-readable storage medium; an interface engine comprising processor-executable instructions stored on the computer-readable storage medium; and a processor coupled to the computer-readable storage medium and configured to execute the processor-executable instructions, wherein the processor-executable instructions, when executed by the processor, direct the computing apparatus, to at least: identify an event involving a peripheral for a client device, wherein the peripheral comprises an external device that extends a functionality of the client device; determine connection capabilities of the client device; determine a connection for the peripheral based on the connection capabilities of the client device and the event; and generate a notification of the connection for the client device.

Example 2 is the computing apparatus of any previous or subsequent Example, wherein the processor-executable instructions to identify the event involving a peripheral for the client device, when executed by the processor, further direct the computing apparatus to: detect a defective connection between the peripheral and the client device.

Example 3 is the computing apparatus of any previous or subsequent Example, wherein the processor-executable instructions to determine the connection for the peripheral based on the connection capabilities of the client device, when executed by the processor, further direct the computing apparatus to: generate a input requesting connections capable of connecting the peripheral to the client device based on the connection capabilities of the client device and the event; provide the input to a content generator, wherein the content generator generates a response responsive to receiving the input; and receive, from the content generator, the response comprising the connection for the peripheral.

Example 4 is the computing apparatus of any previous or subsequent Example, wherein the processor-executable instructions to identify the event involving a peripheral for the client device, when executed by the processor, further direct the computing apparatus to: receive, from the client device, a query involving the peripheral; and perform one or more natural language processes on the query.

Example 5 is the computing apparatus of any previous or subsequent Example, wherein the processor-executable instructions to determine the connection for the peripheral based on the connection capabilities of the client device, when executed by the processor, further direct the computing apparatus to: determine an available capacity of the client device; and determine the connection capabilities of the client device based on the available capacity.

Example 6 is the computing apparatus of any previous or subsequent Example, wherein the processor-executable instructions to determine the connection for the peripheral based on the connection capabilities of the client device, when executed by the processor, further direct the computing apparatus to: determine dynamic metadata associated with the client device; and determine the connection for the peripheral based on the dynamic metadata associated with the client device.

Example 7 is a method comprising: identifying, by an interface engine, an event involving a peripheral for a client device, wherein the peripheral comprises an external device that extends a functionality of the client device; determining, by the interface engine, connection capabilities of the client device; determining, by the interface engine, a connection for the peripheral based on the connection capabilities of the client device and the event; and generating, by the interface engine, a notification of the connection for the client device.

Example 8 is the method of any previous or subsequent Example, wherein: determining, by the interface engine, the connection capabilities of the client device comprises determining, by the interface engine, a hardware capacity of the client device; and determining, by the interface engine, connection for the peripheral based on the connection capabilities of the client device and the event comprises: generating, by the interface engine, a input requesting connections capable of connecting the peripheral to the client device based on the hardware capacity of the client device and the event; providing, by the interface engine, the input to a content generator; and receiving, by the interface engine, a response from the content generator comprising the connection for the peripheral, wherein the content generator generates the response responsive to the input.

Example 9 is the method of any previous or subsequent Example, wherein identifying, by the interface engine, the event involving the peripheral for the client device comprises: detecting, by the interface engine, a fault caused by a connection between the peripheral and the client device.

Example 10 is the method of any previous or subsequent Example, wherein: identifying, by the interface engine, the event involving the peripheral for the client device comprises receiving, by the interface engine, a query involving the peripheral from the client device; and determining, by the interface engine, the connection for the peripheral based on the connection capabilities of the client device and the event comprises: performing, by the interface engine, one or more natural language processes on the query; determining, by the interface engine, the peripheral from the query based on the one or more natural language processes; and generating, by the interface engine, a recommendation comprising the connection for the peripheral based on the peripheral and the connection capabilities of the client device.

Example 11 is the method of any previous or subsequent Example, wherein the method further comprises determining, by the interface engine, the connection for the peripheral based on the connection capabilities of the client device and the event comprises: determining, by the interface engine, at least one existing connections associated with the client device; and determining, by the interface engine, the connection based on the at least one existing connection.

Example 12 is the method of any previous or subsequent Example, wherein determining, by the interface engine, the connection capabilities of the client device comprises: determining, by the interface engine, a hardware capacity of the client device; and determining, by the interface engine, the connection capabilities of the client device based on the hardware capacity.

Example 13 is the method of any previous or subsequent Example, wherein the method further comprises determining, by the interface engine, the connection for the peripheral based on the connection capabilities of the client device and the event comprises: determining, by the interface engine, dynamic metadata associated with the client device, wherein the dynamic metadata comprises one or more of: port availability; port specifications; operating system and drivers; bandwidth requirements; version compatibility; and port placement and accessibility.

Example 14 is the method of any previous or subsequent Example, wherein the connection comprises one of: a hardware connection; or a wireless connection.

Example 15 is a computer readable storage media comprising processor-executable instructions configured to cause a processor to: identify, by an interface engine, an event involving a peripheral for a client device, wherein the peripheral comprises an external device that extends a functionality of the client device; determine, by the interface engine, connection capabilities of the client device; determine, by the interface engine, a connection for the peripheral based on the connection capabilities of the client device and the event; and generate, by the interface engine, a notification of the connection for the client device.

Example 16 is the computer readable storage media of any previous or subsequent Example, wherein: the processor-executable instructions to determine, by the interface engine, the connection capabilities of the client device cause the processor to further execute processor-executable instructions stored in the computer readable storage media to: determine, by the interface engine, available capacity of the client device; and the processor-executable instructions to determine, by the interface engine, the connection for the peripheral based on the connection capabilities of the client device cause the processor to further execute processor-executable instructions stored in the computer readable storage media to: generate, by the interface engine, a input requesting connections capable of connecting the peripheral to the client device based on the available capacity of the client device and the event; provide, by the interface engine, the input to a content generator; and receive, by the interface engine, a response from the content generator comprising the connection for the peripheral, wherein the content generator generates the response responsive to the input.

Example 17 is the computer readable storage media of any previous or subsequent Example, wherein the processor-executable instructions to identify, by the interface engine, the event involving a peripheral cause the processor to further execute processor-executable instructions stored in the computer readable storage media to: determine, by the interface engine, a improper connection between the peripheral and the client device, wherein the improper connection comprises reducing the functionality of the peripheral for the client device.

Example 18 is the computer readable storage media of any previous or subsequent Example, wherein the processor-executable instructions to generate, by the interface engine, the notification of the connection for the client device cause the processor to further execute processor-executable instructions stored in the computer readable storage media to: generate, by the interface engine, a recommendation for the connection, wherein the recommendation comprises a link to information on the connection; and transmit, by the interface engine, the recommendation to the client device.

Example 19 is the computer readable storage media of any previous or subsequent Example, wherein: the processor-executable instructions to determine, by the interface engine, the connection for the peripheral based on the connection capabilities of the client device cause the processor to further execute processor-executable instructions stored in the computer readable storage media to: determine, by the interface engine, at least one existing connections associated with the client device; and the processor-executable instructions to generate, by the interface engine, the notification of the connection for the client device cause the processor to further execute processor-executable instructions stored in the computer readable storage media to: generate, by the interface engine, an arrangement recommendation for the at least one existing connections and the connection determined based on the connection capabilities of the client device.

Example 20 is the computer readable storage media of any previous or subsequent Example, wherein: the processor-executable instructions to determine, by the interface engine, the connection for the peripheral based on the connection capabilities of the client device cause the processor to further execute processor-executable instructions stored in the computer readable storage media to: determine, by the interface engine, a plurality of compatible connections for the peripheral; and determine, by the interface engine, the connection from the plurality of compatible connections based on the connection capabilities of the client device.

This application claims priority to US application 18/933078 filed 31 Oct 2024 the contents (specification, drawings and claims) of which are herein incorporated by reference.

## Claims

1. A computing apparatus comprising:
a computer-readable storage medium;
an interface engine comprising processor-executable instructions stored on the computer-readable storage medium; and
a processor coupled to the computer-readable storage medium and configured to execute the processor-executable instructions, wherein the processor-executable instructions, when executed, direct the computing apparatus, to at least:
identify an event involving a peripheral and a client device, wherein the peripheral comprises an external device that extends a functionality of the client device;
determine connection capabilities of the client device;
determine a connection for the peripheral based on the connection capabilities of the client device and the event; and
generate a notification of the connection for the client device.

2. The computing apparatus of claim 1, wherein the processor-executable instructions to identify the event involving a peripheral for the client device, when executed, further direct the computing apparatus to:
detect a defective connection between the peripheral and the client device.

3. The computing apparatus of claim 1, wherein the processor-executable instructions to determine the connection for the peripheral based on the connection capabilities of the client device, when executed, further direct the computing apparatus to:
generate an input requesting connections capable of connecting the peripheral to the client device based on the connection capabilities of the client device and the event;
provide the input to a content generator, wherein the content generator generates a response responsive to receiving the input; and
receive, from the content generator, the response comprising the connection for the peripheral.

4. The computing apparatus of claim 1, wherein the processor-executable instructions to identify the event involving a peripheral for the client device, when executed, further direct the computing apparatus to:
receive, from the client device, a query involving the peripheral; and
perform one or more natural language processes on the query.

5. The computing apparatus of claim 1, wherein the processor-executable instructions to determine the connection for the peripheral based on the connection capabilities of the client device, when executed, further direct the computing apparatus according to one of the following to:
(i) determine an available capacity of the client device; and
determine the connection capabilities of the client device based on the available capacity;
(ii) determine dynamic metadata associated with the client device; and
determine the connection for the peripheral based on the dynamic metadata associated with the client device.

6. A method comprising:
identifying, by an interface engine, an event involving a peripheral for a client device, wherein the peripheral comprises an external device that extends a functionality of the client device;
determining, by the interface engine, connection capabilities of the client device;
determining, by the interface engine, a connection for the peripheral based on the connection capabilities of the client device and the event; and
generating, by the interface engine, a notification of the connection for the client device.

7. The method of claim 6, wherein:
determining, by the interface engine, the connection capabilities of the client device comprises determining, by the interface engine, a hardware capacity of the client device; and
determining, by the interface engine, connection for the peripheral based on the connection capabilities of the client device and the event comprises:
generating, by the interface engine, a input requesting connections capable of connecting the peripheral to the client device based on the hardware capacity of the client device and the event;
providing, by the interface engine, the input to a content generator; and
receiving, by the interface engine, a response from the content generator comprising the connection for the peripheral, wherein the content generator generates the response responsive to the input.

8. The method of claim 6, wherein identifying, by the interface engine, the event involving the peripheral for the client device comprises one of the following:
(i) detecting, by the interface engine, a fault caused by a connection between the peripheral and the client device;
(ii) receiving, by the interface engine, a query involving the peripheral from the client device; and
determining, by the interface engine, the connection for the peripheral based on the connection capabilities of the client device and the event comprises:
performing, by the interface engine, one or more natural language processes on the query;
determining, by the interface engine, the peripheral from the query based on the one or more natural language processes; and
generating, by the interface engine, a recommendation comprising the connection for the peripheral based on the peripheral and the connection capabilities of the client device.

9. The method of claim 6, wherein the method further comprises determining, by the interface engine, the connection for the peripheral based on the connection capabilities of the client device and the event comprises:
determining, by the interface engine, at least one existing connections associated with the client device; and
determining, by the interface engine, the connection based on the at least one existing connection and
optionally wherein determining, by the interface engine, the connection capabilities of the client device comprises:
determining, by the interface engine, a hardware capacity of the client device; and
determining, by the interface engine, the connection capabilities of the client device based on the hardware capacity.

10. The method of claim 6, wherein the method further comprises determining, by the interface engine, the connection for the peripheral based on the connection capabilities of the client device and the event comprises:
determining, by the interface engine, dynamic metadata associated with the client device, wherein the dynamic metadata comprises one or more of:
port availability; port specifications; operating system and drivers; bandwidth requirements; version compatibility; and port placement and accessibility; and
optionally wherein the connection comprises one of: a hardware connection; or a wireless connection.

11. A computer readable storage media comprising processor-executable instructions configured to cause a processor to:
identify, by an interface engine, an event involving a peripheral for a client device, wherein the peripheral comprises an external device that extends a functionality of the client device;
determine, by the interface engine, connection capabilities of the client device;
determine, by the interface engine, a connection for the peripheral based on the connection capabilities of the client device and the event; and
generate, by the interface engine, a notification of the connection for the client device.

12. The computer readable storage media of claim 11, wherein:
the processor-executable instructions to determine, by the interface engine, the connection capabilities of the client device cause the processor to further execute processor-executable instructions stored in the computer readable storage media to:
determine, by the interface engine, available capacity of the client device; and
the processor-executable instructions to determine, by the interface engine, the connection for the peripheral based on the connection capabilities of the client device cause the processor to further execute processor-executable instructions stored in the computer readable storage media to:
generate, by the interface engine, an input requesting connections capable of connecting the peripheral to the client device based on the available capacity of the client device and the event;
provide, by the interface engine, the input to a content generator; and
receive, by the interface engine, a response from the content generator comprising the connection for the peripheral, wherein the content generator generates the response responsive to the input.

13. The computer readable storage media of claim 11, wherein the processor-executable instructions to identify, by the interface engine, the event involving a peripheral cause the processor to further execute processor-executable instructions stored in the computer readable storage media to:
determine, by the interface engine, an improper connection between the peripheral and the client device, wherein the improper connection comprises reducing the functionality of the peripheral for the client device.

14. The computer readable storage media of claim 11, wherein the processor-executable instructions to generate, by the interface engine, the notification of the connection for the client device cause the processor to further execute processor-executable instructions stored in the computer readable storage media to:
generate, by the interface engine, a recommendation for the connection, wherein the recommendation comprises a link to information on the connection; and
transmit, by the interface engine, the recommendation to the client device.

15. The computer readable storage media of claim 11, wherein:
the processor-executable instructions to determine, by the interface engine, the connection for the peripheral based on the connection capabilities of the client device cause the processor to further execute processor-executable instructions stored in the computer readable storage media according to one of the following to:
(i) determine, by the interface engine, at least one existing connections associated with the client device; and
the processor-executable instructions to generate, by the interface engine, the notification of the connection for the client device cause the processor to further execute processor-executable instructions stored in the computer readable storage media to:
generate, by the interface engine, an arrangement recommendation for the at least one existing connections and the connection determined based on the connection capabilities of the client device;
(ii) determine, by the interface engine, a plurality of compatible connections for the peripheral; and
determine, by the interface engine, the connection from the plurality of compatible connections based on the connection capabilities of the client device.
